(19) Europäisches Patentamt / European Patent Office / Office européen des brevets

(11) **EP 4 105 639 A1**

(12) **DEMANDE DE BREVET EUROPEEN**

(43) Date de publication:
**21.12.2022 Bulletin 2022/51**

(21) Numéro de dépôt: **22178685.8**

(22) Date de dépôt: **13.06.2022**

(51) Classification Internationale des Brevets (IPC):
**G01N 17/00** (2006.01)   **G01N 27/02** (2006.01)
**G01N 17/02** (2006.01)   **F28F 27/00** (2006.01)
**F28G 15/00** (2006.01)   **F28F 19/00** (2006.01)

(52) Classification Coopérative des Brevets (CPC):
**F28F 19/00; F28F 27/00; F28G 15/00;
G01N 17/008; G01N 17/02; G01N 27/026**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.06.2021 FR 2106220**

(71) Demandeur: **IFP Energies nouvelles
92500 Rueil-Malmaison (FR)**

(72) Inventeurs:
• **BONNEAU, Alexandre
92852 Rueil-Malmaison Cedex (FR)**

• **BONNIER, Laurie
92852 Rueil-Malmaison Cedex (FR)**
• **CHEVALLIER, Lou
92852 Rueil-Malmaison Cedex (FR)**
• **JOSHI, Gaurav
92852 Rueil-Malmaison Cedex (FR)**
• **KITTEL, Jean
92852 Rueil-Malmaison Cedex (FR)**

(74) Mandataire: **IFP Energies nouvelles
Département Propriété Industrielle
Rond Point de l'échangeur de Solaize
BP3
69360 Solaize (FR)**

(54) **DISPOSITIF DE DETERMINATION D'UNE VARIATION DE PERFORMANCES THERMIQUES D'UN ECHANGEUR DE CHALEUR**

(57) Dispositif et méthode de détermination des variations de performances thermiques d'un échangeur de chaleur mettant en oeuvre des mesures électrochimiques (5, 6, 7, 9) et comparant dans le temps des mesures électrochimiques. En outre, la demande concerne un système expérimental de prédiction d'une variation de performances thermiques, ainsi qu'un échangeur de chaleur qui mettent en oeuvre le dispositif ou le procédé.

[Fig 1]

EP 4 105 639 A1

## Description

### Domaine technique

La présente invention concerne le domaine des échangeurs de chaleur, dans le but de déterminer leurs pertes d'efficacité dues à des phénomènes d'encrassement. L'invention concerne également un système expérimental et un échangeur de chaleur intégrant un dispositif de détermination d'une variation de performances thermiques.

L'encrassement des surfaces métalliques d'installations industrielles constitue un problème opérationnel majeur, en particulier au sein des échangeurs de chaleur. Ce problème peut générer des coûts de maintenance élevés, des pertes d'efficacité des procédés, des arrêts de production, etc. Ces dépôts peuvent être de natures très variées, notamment des dépôts minéraux. Ces dépôts peuvent dans certains cas être favorisés par un phénomène de corrosion de l'installation et contenir des cations métalliques, comme par exemple dans le carbonate de fer. On rencontre également des dépôts provenant exclusivement de la précipitation de sels initialement dissous dans le fluide en contact avec les parois métalliques : par exemple du carbonate de calcium ou le sulfate de calcium. Dans ce cas, le phénomène de précipitation peut être favorisé par des changements de température ou de pression du fluide, comme on peut en rencontrer dans des tubes de puits au fur et à mesure que le fluide remonte vers la surface, ou bien dans des échangeurs de chaleur par exemple. Enfin, des dépôts mixtes contenant à la fois des produits de corrosion et des sels issus du milieu sont également fréquents.

Il existe différentes solutions pour prévenir de tels dépôts, parmi lesquelles on peut citer les inhibiteurs d'encrassement, des injections d'acide pour dissoudre des dépôts déjà formés, ou encore l'emploi de nuances d'aciers résistantes à la corrosion. Afin d'optimiser les coûts de telles mesures, il est intéressant de disposer de moyens de détection in-situ de la formation de dépôts. De telles techniques peuvent être utilisées par exemple pour déclencher des actions de nettoyage ou pour ajuster en continu l'injection d'additifs.

En outre, il peut également être intéressant de disposer de moyens de détection in-situ ou des moyens de prédiction de la réduction ou de la destruction des dépôts à la suite de l'utilisation d'une méthode de remédiation ou de maintenance (inhibiteur d'encrassement, injection d'acide, etc.).

### Technique antérieure

Il existe de nombreuses méthodes de détection de l'encrassement minéral sur une surface (par ex. par mesure du changement de température, d'un débit d'écoulement, etc.). Pour les échangeurs de chaleur, une méthode courante consiste à effectuer des mesures de perte de charge entre l'entrée et la sortie de l'échangeur. Une augmentation de la perte de charge peut être associée à des diminutions de section de passage du fluide causées par des dépôts.

Une autre méthode également souvent citée fait appel à des mesures de températures en entrée et en sortie de l'échangeur. Une diminution de l'écart entre ces deux températures peut être révélatrice d'une baisse de performance de l'échangeur de chaleur causée par un dépôt. Une telle méthode est par exemple proposée dans le certificat d'utilité CN209486013U. Cette technique de mesures de températures peut encore être améliorée afin de déterminer des paramètres représentatifs de la performance de l'échange thermique, et par voie de conséquence une baisse de cette performance en cas de présence de dépôt. Ainsi, il est assez classique de déterminer une résistance d'encrassement (en anglais : « fouling résistance », Rf) dont le calcul est basé sur des mesures de température des fluides de part et d'autre de la paroi métallique, ainsi qu'à la surface de cette paroi.

Par exemple, le document « Bipan Bansal, Hans MÜller-Steinhage (2001) Comparison of Crystallization Fouling in Plate and Double-Pipe Heat Exchangers. In : Heat Transfer Engineering, vol. 22, n° 5, p. 13-25. DOI: 10.1080/01457630117263 » définit la résistance d'encrassement par la formule suivante :

$$R_f = \frac{1}{U} - \frac{1}{U_0}$$

Avec $U$ et $U_0$ les coefficients de transfert thermique respectivement au temps t et temps 0. Ces coefficients sont définis par la formule suivante :

$$U = \frac{\dot{Q}}{A.\Delta T_{log}}$$

Avec A est la surface de transfert de chaleur, $\dot{Q}$ le flux thermique, et $\Delta T_{log}$ la différence de température moyenne logarithmique. Dans cette équation, le flux thermique peut être défini par :

$$\dot{Q} = \dot{M}.c_p.(T_o - T_i)$$

Avec $\dot{M}$ le débit massique de la solution (c'est-à-dire un des fluides présents dans l'échangeur de chaleur), $c_p$ la chaleur spécifique de la solution, $T_o$ la température de sortie de la solution, $T_i$ la température d'entrée de la solution.

Cette méthode nécessite toutefois d'introduire des thermocouples dans l'échangeur thermique, et la mesure des températures de surface peut s'avérer complexe. Par ailleurs, les thermocouples peuvent eux-mêmes être soumis à encrassement, ce qui peut biaiser les mesures.

Toujours basées sur des mesures de température, d'autres techniques peuvent faire appel à une source de chaleur contrôlée, par exemple au moyen de résistances appliquées sur la paroi de l'équipement (interne ou externe) à contrôler et soumise à une puissance bien contrôlée. Une telle technique est décrite notamment dans la demande de brevet WO09153323 A1. Cette méthode est assez complexe, et implique l'emploi de matériel onéreux qui nécessite un suivi métrologique pointu. De plus, elle requiert également l'emploi de capteurs intrusifs, en particulier des thermocouples.

D'autres méthodes peuvent être utilisées, comme par exemple :

- Des mesures de teneurs en sels dans le fluide encrassant, afin de détecter une baisse de concentration de certaines espèces, significative d'un phénomène de précipitation. Cette méthode est toutefois complexe, car elle nécessite de réaliser des prélèvements pour analyses, et par ailleurs, elle ne renseigne pas du lieu où s'est produite la précipitation. En particulier, une précipitation de particules de petite taille qui restent en suspension dans la solution peut donner la même réponse qu'une précipitation massive en surface des tubes d'échangeur, alors que ces deux cas sont très différents vis-à-vis de leurs conséquences sur les échanges thermiques.
- Des méthodes ultrasonores, qui se basent sur une modification des caractéristiques des ondes ultrasonores renvoyées par les surfaces de métal selon qu'un dépôt est présent ou non en surface, une telle méthode est décrite par exemple dans la demande de brevet EP 2115452. Même si elles sont très sensibles, ces techniques présentent les inconvénients d'être assez complexes à mettre en œuvre, avec notamment des capteurs spécifiques, et de ne procéder qu'à une mesure ponctuelle et non moyennée sur une surface.
- Des méthodes d'imagerie, par exemple utilisant la tomographie par capacitance électrique qui permet de détecter les variations de permittivité diélectrique de l'objet contrôlé, et de détecter ainsi des dépôts sur des surfaces métalliques, une telle méthode est décrite par exemple dans la demande de brevet WO2014/184421 A1.
- La microbalance à quartz, qui permet une mesure directe de la masse de dépôt formé à la surface d'une électrode métallique déposée sur un substrat en quartz. Cette méthode extrêmement sensible a comme principal défaut de ne pas réaliser la mesure directement sur le système réel, mais sur la surface du quartz, non complètement représentatif de l'échangeur thermique (nature de l'électrode métallique non représentative d'un acier massif, propriétés d'échange thermique différentes entre la surface de la microbalance et les tubes d'échangeur).

**Résumé de l'invention**

L'invention a pour but de déterminer des variations de performances thermiques d'un échangeur de chaleur de manière simple, rapide et précise. Pour cela l'invention concerne un dispositif et une méthode de détermination des variations de performances thermiques d'un échangeur de chaleur qui met en œuvre des mesures électrochimiques et une comparaison dans le temps des mesures électrochimiques. Les mesures électrochimiques permettent une mesure simple, rapide et précise. La comparaison dans le temps permet de déduire la variation de performances thermiques.

En outre, l'invention concerne un système expérimental de prédiction d'une variation de performances thermiques, ainsi qu'un échangeur de chaleur qui mettent en œuvre le dispositif ou le procédé selon l'invention.

L'invention concerne un dispositif de détermination d'une variation de performances thermiques d'un échangeur de chaleur entre deux fluides ou entre un fluide et une source de chaleur ou une source de froid, ledit échangeur de chaleur comprenant au moins une paroi métallique pour le transfert thermique. Ledit dispositif comporte des moyens de mesures électrochimiques, lesdits moyens de mesures électrochimiques comprenant une électrode formée par ladite au moins une paroi métallique et au moins une deuxième électrode, et en ce que ledit dispositif comporte des moyens de détermination de la variation de performances thermiques dudit échangeur de chaleur qui comparent la mesure électrochimique réalisée par lesdits moyens de mesures électrochimiques entre au moins deux instants distincts.

Selon un mode de réalisation, ledit dispositif comporte des moyens de mesure de la température d'au moins un des fluides.

Conformément à une mise en œuvre, lesdits moyens de mesures électrochimiques comportent au moins une contre électrode, de préférence la contre électrode est en platine.

Selon un aspect, lesdits moyens de mesures électrochimiques comportent au moins une électrode de référence, ladite électrode de référence étant agencée dans un desdits deux fluides, de préférence ladite électrode de référence est de type Ag/AgCl.

Avantageusement, lesdits moyens de mesures électrochimiques sont des moyens de mesure de l'impédance électrochimique, notamment des moyens de spectroscopie d'impédance électrochimique.

De plus, l'invention concerne un système expérimental de prédiction d'une variation de performances thermiques d'un échangeur de chaleur, ledit système de prédiction comprenant un réservoir comportant un premier fluide, une portion de paroi métallique dudit échangeur de chaleur agencée dans ledit premier fluide au sein dudit réservoir, et dans lequel on fait circuler un deuxième fluide ou dans lequel on apporte de la chaleur ou du froid. Ledit système de prédiction comprend un dispositif de détermination d'une variation de performances thermiques d'un échangeur de chaleur selon l'une des caractéristiques précédentes, pour lequel lesdits moyens de mesures électrochimiques comprennent au moins deux électrodes, dont une électrode est formée par ladite paroi métallique.

Avantageusement, ledit système de prédiction comprend des moyens de bullage d'un gaz dans ledit premier fluide.

L'invention concerne également un échangeur de chaleur comprenant au moins deux volumes pour la circulation respectives de deux fluides, lesdits deux volumes étant séparés par au moins une paroi métallique. Ledit échangeur de chaleur comprend au moins un dispositif selon l'une des caractéristiques précédentes, une électrode desdits moyens de mesure électrochimiques étant formée par ladite au moins une paroi métallique.

Conformément à un mode de réalisation, ledit échangeur de chaleur est un échangeur de chaleur à tubes ou un échangeur de chaleur à plaques.

En outre, l'invention concerne un procédé de détermination d'une variation de performances thermiques d'un échangeur de chaleur entre deux fluides ou entre un fluide et une source de chaleur ou une source de froid, ledit échangeur de chaleur comprenant au moins une paroi métallique pour le transfert thermique entre lesdits deux fluides. Pour ce procédé, on met en œuvre les étapes suivantes :

a. On réalise, à un premier instant, une première mesure électrochimique, de préférence une mesure d'impédance électrochimique, au moyen de deux électrodes, une électrode étant formée par ladite au moins une paroi métallique;
b. On réalise, à un deuxième instant, une deuxième mesure électrochimique, de préférence une mesure d'impédance électrochimique, au moyen desdites deux électrodes ; et
c. On compare ladite première mesure électrochimique à ladite deuxième mesure électrochimique, et on en déduit une variation de performances thermiques dudit échangeur de chaleur entre le premier instant et le deuxième instant.

Selon une mise en œuvre, on réalise ladite mesure d'impédance électrochimique, notamment une spectroscopie d'impédance électrochimique, à une fréquence comprise entre $10^{-3}$ et $10^{5}$ Hz, de préférence comprise entre $10^{-2}$ et $10^{4}$ Hz.

Selon un aspect, on réalise ladite mesure d'impédance électrochimique, notamment une spectroscopie d'impédance électrochimique, à une amplitude comprise entre $\pm1$ et $\pm100$ mV, de préférence comprise entre $\pm5$ et $\pm20$ mV.

D'autres caractéristiques et avantages des dispositifs et du procédé selon l'invention, apparaîtront à la lecture de la description ci-après d'exemples non limitatifs de réalisations, en se référant aux figures annexées et décrites ci-après.

**Liste des figures**

La figure 1 illustre un système expérimental selon un mode de réalisation de l'invention.

La figure 2 illustre un échangeur de chaleur selon un mode de réalisation de l'invention.

La figure 3 illustre un circuit électrique équivalent pour analyser les résultats des mesures d'impédance électrochimique selon un mode de réalisation.

La figure 4 est une série de courbes, pour un premier exemple, de la partie imaginaire de l'impédance électrochimique en fonction de la partie réelle de l'impédance électrochimique mesurées après différentes durées d'immersion correspondant à différents niveaux d'encrassement minéral, l'impédance électrochimique étant obtenue par le dispositif selon un mode de réalisation de l'invention.

La figure 5 est une série de courbes, pour un deuxième exemple, de la partie imaginaire de l'impédance électrochimique en fonction de la partie réelle de l'impédance électrochimique mesurées après différentes durées d'immersion correspondant à différents niveaux d'encrassement minéral, l'impédance électrochimique étant obtenue par le dispositif selon un mode de réalisation de l'invention.

La figure 6 est une courbe comparative de la détermination de la résistance d'encrassement à partir d'une mesure électrochimique selon un mode de réalisation de l'invention et selon un mode de réalisation de l'art antérieur pour le premier exemple de la figure 4.

La figure 7 est une courbe comparative de la détermination de la résistance d'encrassement à partir d'une mesure électrochimique selon un mode de réalisation de l'invention et selon un mode de réalisation de l'art antérieur pour le deuxième exemple de la figure 5.

## Description des modes de réalisation

La présente invention concerne la détermination d'une variation de performances thermiques d'un échangeur de chaleur. Un échangeur de chaleur permet d'échanger de la chaleur entre deux fluides, ou entre un fluide et une source de chaleur ou une source de froid (également appelée source d'apport ou de consommation de chaleur, par exemple une résistance électrique chauffante). Généralement, un tel échangeur de chaleur comprend au moins une paroi métallique qui permet le transfert thermique entre les deux fluides ou entre le fluide et la source de chaleur ou la source de froid. Le métal de la paroi peut être de tout type, notamment un acier, un aluminium, un cuivre, etc. ainsi que leurs alliages. La variation des performances thermiques d'un échangeur de chaleur traduit les évolutions de performances de l'échangeur de chaleur. Une telle variation est liée à l'encrassement et la corrosion de l'échangeur de chaleur. Cette variation de performances thermiques peut être une perte de performances thermiques lors de la génération de l'encrassement, ou peut être une amélioration de performances thermiques suite à une opération de remédiation ou de maintenance de l'échangeur de chaleur.
L'invention concerne les objets suivants :

- Un dispositif de détermination d'une variation de performances thermiques d'un échangeur de chaleur,
- Un système expérimental de prédiction d'une variation de performances thermiques,
- Un échangeur de chaleur, et
- Un procédé de détermination d'une variation de performances thermiques d'un échangeur de chaleur.

Les différents objets sont décrits dans la suite de la description.

## Dispositif de détermination d'une variation de performances thermiques

L'invention concerne un dispositif de détermination d'une variation de performances thermiques d'un échangeur de chaleur. L'échangeur de chaleur comprend au moins une paroi métallique pour le transfert thermique entre lesdits deux fluides, ou entre un fluide et une source de chaleur ou une source de froid, par exemple une résistance électrique chauffante.
Selon l'invention, le dispositif comporte des moyens de mesures électrochimiques. Les moyens de mesures électrochimiques comprennent au moins deux électrodes, et de préférence trois électrodes, pour réaliser des mesures électrochimiques. Une des deux électrodes, appelée électrode de travail, correspond à la paroi métallique de l'échangeur de chaleur sur laquelle un encrassement est susceptible de se produire. La mesure électrochimique au moyen de l'électrode de travail permet de déduire la présence ou l'absence d'encrassement de manière simple et rapide. De plus, les moyens de mesures électrochimiques peuvent comprendre un potentiostat, qui est un appareil électronique destiné à l'étude des phénomènes électrochimiques. En principe pour les mesures électrochimiques, on peut porter une électrode (électrode de travail) à un potentiel donné par rapport à une électrode de référence (deuxième électrode) et on peut mesurer un courant électrique qui circule entre l'électrode de travail et une troisième électrode appelée contre-électrode. De préférence, cette contre-électrode est chimiquement inerte, elle ne réagit donc ni avec un des deux fluides, ni par application d'un potentiel. En revanche, des substances présentes dans un des deux fluides peuvent être oxydées ou réduites à la surface de l'électrode. Dans une variante de l'invention, cette contre-électrode peut aussi jouer le rôle d'électrode de référence, auquel cas le dispositif de mesure peut ne comporter que deux électrodes.
De plus, le dispositif comporte des moyens de détermination de la variation de performances thermiques qui comparent des mesures électrochimiques réalisées par les moyens de mesures électrochimiques à deux instants différents. La comparaison des mesures à deux instants permet de suivre l'évolution de l'encrassement, et d'en déduire la variation des performances thermiques de l'échangeur de chaleur. Par exemple, les variations de performances thermiques peuvent s'écrire :

$$\Delta P_{th}(t) = f\big(Mes(t) - Mes(t_0)\big)$$

Avec $P_{th}$ les performances thermiques, $\Delta P_{th}$ les variations des performances thermiques, t l'instant considéré, $t_0$ l'instant initial (ou premier instant), f une fonction qui relie la mesure à la performance thermique, Mes la mesure électrochimique.

Par exemple, le premier instant peut être un instant en absence de dépôt (en absence d'encrassement) afin de déterminer les performances thermiques optimales de l'échangeur de chaleur, et le deuxième instant peut être un instant postérieur après utilisation de l'échangeur de chaleur, afin de déterminer si les performances thermiques de l'échangeur de chaleur ont évolué par rapport au premier instant sans encrassement.

Alternativement, le premier instant peut être un instant quelconque en utilisation de l'échangeur de chaleur.

De préférence, les moyens de mesures électrochimiques peuvent être des moyens de mesure de l'impédance électrochimique. Parmi les mesures électrochimiques, l'invention peut mettre en œuvre la spectroscopie d'impédance électrochimique (SIE), pour laquelle on peut mesurer la réponse électrochimique de la paroi métallique à différentes fréquences. Alternativement, le dispositif peut mettre en œuvre d'autres mesures électrochimiques analogues. Par exemple, les variations de performances thermiques peuvent s'écrire :

$$\Delta P_{th}(t) = g\big(SIE(t) - SIE(t_0)\big)$$

Avec $P_{th}$ les performances thermique, $\Delta P_{th}$ les variations des performances thermiques, t l'instant considéré, $t_0$ l'instant initial (ou premier instant), g une fonction qui relie la mesure à la performance thermique, SIE la mesure de spectroscopie d'impédance électrochimique.

Selon une option de réalisation, la seconde électrode (contre-électrode) peut être réalisée de préférence en platine ou en titane platiné. Alternativement, on peut utiliser des alliages résistant à la corrosion, par exemple dans la famille des alliages de nickel ou la famille des aciers inoxydables.

Selon un aspect, les moyens de mesures électrochimiques peuvent comprendre en outre une électrode de référence. De préférence, l'électrode de référence peut être une électrode commerciale, comme par exemple l'électrode Ag/AgCl qui est constituée d'un fil d'argent couvert d'un dépôt de chlorure d'argent, plongé dans une solution aqueuse de KCl. D'autres électrodes de référence commerciales peuvent tout autant convenir, comme par exemple l'électrode Hg/HgO, ou l'électrode au sulfate mercureux. De manière alternative, l'électrode de référence peut être constituée d'un simple métal non corrodable comme du platine ou du titane platiné, plongé dans le fluide. On peut alors parler de pseudo-référence.

Selon une première réalisation, les moyens de mesures électrochimiques peuvent comprendre un montage à trois électrodes : l'électrode de travail (paroi métallique de l'échangeur de chaleur), une électrode auxiliaire ou contre-électrode, et une électrode de référence. L'avantage d'un tel montage est de dissocier les circuits de mesure de tension et de courant, ce qui rend les mesures électrochimiques plus précises et plus fiables. Alternativement, les moyens de mesures électrochimiques peuvent comprend un montage de trois électrodes : l'électrode de travail (paroi métallique de l'échangeur de chaleur), une électrode auxiliaire, et une pseudo-électrode de référence (c'est-à-dire une électrode dans un simple métal non corrodable comme du platine ou du titane platiné). La différence principale entre l'utilisation d'une véritable électrode de référence et d'une pseudo-référence réside dans la fiabilité de la mesure du potentiel. L'utilisation d'une pseudo-référence ne permet pas de connaître avec certitude le potentiel de référence. Néanmoins, la connaissance précise du potentiel de référence n'est pas utile à la mise en œuvre de l'invention. L'utilisation d'une pseudo-référence n'est donc pas préjudiciable.

Selon une deuxième réalisation, les moyens de mesures électrochimiques peuvent comprendre un montage à deux électrodes : l'électrode de travail (paroi métallique de l'échangeur de chaleur) et une électrode auxiliaire réalisée de préférence dans le même métal que l'électrode de travail. Par rapport au dispositif de mesure et aux connections électriques avec le potentiostat, cette électrode auxiliaire joue alors à la fois le rôle de la contre-électrode et de l'électrode de référence. Le principal avantage d'un tel montage est sa simplicité et son moindre coût : il n'est pas nécessaire d'utiliser une contre-électrode en métal noble comme le platine, ni une électrode de référence commerciale, qui peut être sensible à la dégradation dans le milieu d'exposition. Un second avantage est de pouvoir utiliser comme seconde électrode un élément identique à l'électrode de travail (paroi métallique de l'échangeur de chaleur), évitant ainsi d'introduire des éléments étrangers dans l'échangeur.

Selon une troisième réalisation, les moyens de mesures électrochimiques peuvent comprendre un montage à deux électrodes inter-digitées, (sous formes de peignes imbriqués : avec une alternance de dents).

Selon un mode de réalisation, le dispositif peut comporter en outre des moyens de mesure de la température d'au moins un des fluides. De préférence, les moyens de mesures électrochimiques peuvent comporter des moyens de mesure de température de chaque fluide. Ainsi, la possibilité de suivre l'évolution de la température permet d'avoir des données supplémentaires pour déterminer la variation de performances thermiques de l'échangeur de chaleur.

De plus, le dispositif peut comporter des moyens informatiques pour contrôler et enregistrer les informations issues des différents moyens de mesure, en particulier les moyens de mesures électrochimiques.

## Système expérimental de prédiction d'une variation de performances thermiques

Cet objet de l'invention a pour but de prédire expérimentalement (c'est-à-dire en laboratoire) une variation de performances thermiques d'un échangeur de chaleur.

Selon un premier aspect, ce système expérimental peut permettre ainsi de représenter un échangeur de chaleur existant et de tester au moins une des différentes conditions opératoires de l'échangeur de chaleur, notamment le type de fluide, le débit des fluides, les températures des fluides, les moyens de maintenance ou remédiation, etc. de manière à prédire l'encrassement et par conséquent une variation de performances thermiques de l'échangeur de chaleur.

Selon un deuxième aspect, ce système expérimental peut permettre en outre d'assister à la conception d'un nouvel échangeur de chaleur. En effet, il permet de tester notamment la forme et/ou les dimensions et/ou le matériau de la paroi métallique de l'échangeur de chaleur ainsi qu'au moins une des conditions opératoires de l'échangeur de chaleur notamment le type de fluide, le débit des fluides, les températures des fluides, les moyens de maintenance ou remédiation, etc. de manière à dimensionner et/ou sélectionner au moins une des conditions opératoires d'un nouvel échangeur de chaleur.

Selon l'invention, le système expérimental de prédiction d'une variation de performances thermiques d'un échangeur de chaleur comporte :

- Un réservoir comprenant un premier fluide contenant des sels dissous,
- Une portion de paroi métallique, de préférence sous forme d'un tube, qui est agencée dans le réservoir au sein du premier fluide, de plus, un deuxième fluide peut circuler au sein de la portion de paroi métallique ou une source d'apport ou de consommation de chaleur peut être prévue au sein de la portion de paroi métallique, et
- Un dispositif de détermination d'une variation de performances thermiques selon l'une quelconque des variantes ou des combinaisons de variantes du premier objet de l'invention, pour ce dispositif, la portion de paroi métallique forme une électrode de travail des moyens de mesures électrochimiques.

Dans le cas d'un échangeur de chaleur existant, la portion de paroi métallique peut être un échantillon (c'est-à-dire un morceau) d'une paroi métallique de l'échangeur de chaleur.

Les premier et deuxième fluides sont les fluides pouvant être mis en œuvre dans l'échangeur de chaleur. Il peut s'agir notamment, de fluides caloporteurs, de gaz, de vapeur d'eau, de fluide aqueux, de liquides, d'huiles etc.

Selon un exemple de réalisation, le premier fluide peut être un fluide aqueux comprenant des sels dissous et le deuxième fluide peut être un gaz ou un liquide caloporteur.

Alternativement, le premier fluide peut être un liquide caloporteur, et le premier fluide peut être un fluide aqueux comprenant des sels dissous. Ces deux configurations permettent de tester le fonctionnement d'un grand nombre de type d'échangeurs de chaleur.

Afin de représenter le fonctionnement d'un échangeur de chaleur et assurer un échange thermique par la paroi métallique, les premier et deuxième fluides peuvent être à des températures différentes.

La source de chaleur ou la source de froid peut être par exemple une résistance électrique chauffante.

Selon un mode de réalisation, la portion de paroi métallique peut être sensiblement en position horizontale (en position de fonctionnement du système expérimental). Ainsi, l'écoulement au sein de cette portion de paroi métallique n'est pas gravitaire. Alternativement, la portion de paroi métallique peut être dans une autre position, notamment, verticale ou inclinée.

Conformément à une mise en œuvre, le réservoir peut comprendre :

- Une éventuelle entrée pour le premier fluide, de préférence située dans une partie inférieure du réservoir (en position de fonctionnement du système expérimental),
- Une éventuelle sortie pour le premier fluide, de préférence située dans une partie supérieure du réservoir (en position de fonctionnement du système expérimental),
- Une entrée pour le deuxième fluide, et une conduite qui relie l'entrée pour le deuxième fluide et la zone de circulation du deuxième fluide dans la paroi métallique,
- Une sortie pour le deuxième fluide, et une conduite qui relie la zone de circulation du deuxième fluide dans la paroi métallique et la sortie pour le deuxième fluide.

Selon un mode de réalisation, lorsque le réservoir ne comprend pas d'éventuelles entrée et sortie pour le premier fluide, le premier fluide peut être stationnaire dans le réservoir. Pour ce mode de réalisation, le réservoir peut comporter des moyens de réglage de la température du premier fluide dans le réservoir, par exemple au moyen d'une double enveloppe qui comporte un troisième fluide dont la température est contrôlée.

Selon un aspect, l'entrée et la sortie pour le deuxième fluide peuvent être agencées dans une partie supérieure du réservoir (en position de fonctionnement du système expérimental). De plus, les conduites qui relient la paroi métallique et l'entrée et la sortie pour le deuxième fluide peuvent être sensiblement verticales (en position de fonctionnement du système expérimental).

De plus, le système peut comprendre des moyens pour contrôler le débit du deuxième fluide. Ainsi, le système expérimental permet de tester plusieurs conditions opératoires en termes de débit.

Selon un aspect, le système peut comprendre des moyens pour contrôler la température d'au moins un des deux fluides. Ainsi, le système expérimental permet de tester plusieurs conditions opératoires en termes de température.

Selon une option de réalisation, le système expérimental peut comprendre en outre des moyens de bullage d'un gaz dans le premier fluide, lorsque le premier fluide est un liquide. Les moyens de bullage peuvent être des moyens d'injection d'un gaz, par exemple du $CO_2$ ou de l'argon dans le premier fluide. Les moyens de bullage permettent de contrôler la teneur en gaz dissous dans le fluide 1 et de favoriser l'encrassement.

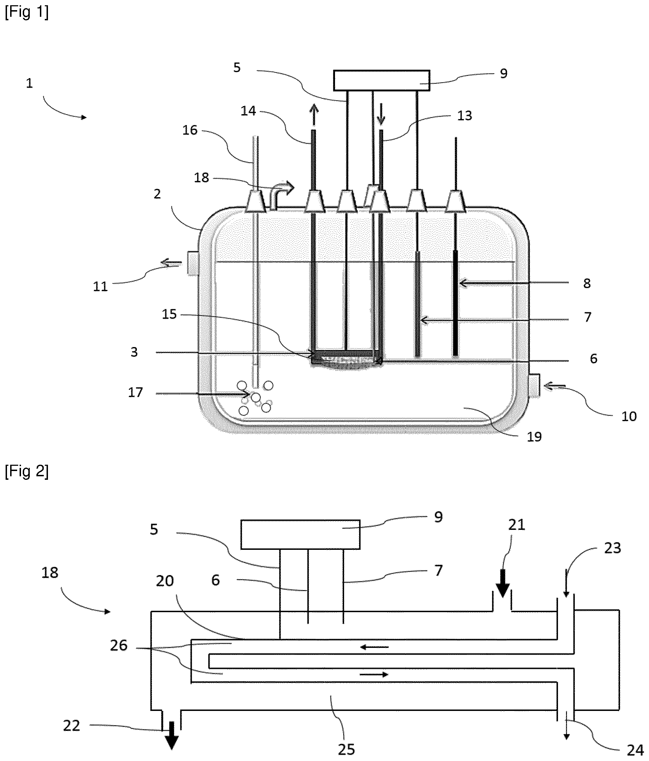

La figure 1 illustre, schématiquement et de manière non limitative, un système expérimental selon un mode de réalisation de l'invention. Le système expérimental 1 comprend un réservoir 2 qui comprend un premier fluide 19 qui contient des sels dissous. La température de ce fluide 19 est régulée à une valeur de consigne par l'intermédiaire de la circulation d'un fluide caloporteur (troisième fluide) dans une double-enveloppe formant les parois du réservoir 2. Le troisième fluide circule entre une entrée du fluide caloporteur 10 et une sortie du fluide caloporteur 11 dans la double-enveloppe du réservoir 2. Au sein du réservoir 2 est agencé un tube métallique 3 représentatif d'une paroi métallique d'un échangeur de chaleur. Pour le mode de réalisation illustré, le tube 3 est placé horizontalement. Au sein du tube 3 circule un deuxième fluide caloporteur. Le deuxième fluide est alimenté par une conduite 13, et ressort par une conduite 14. Etant données les conditions opératoires : températures et présence de sels dans le premier fluide et température du deuxième fluide caloporteur circulant à l'intérieur du tube 3, un dépôt minéral 15 se forme sur la surface extérieure du tube 3 exposée au premier fluide 19. Ce dépôt minéral 15 détériore les échanges thermiques de la paroi métallique et par conséquent diminue les performances thermiques de la paroi métallique.

Le système expérimental 1 comprend en outre des moyens de mesures électrochimiques, qui permettent notamment de réaliser des mesures d'impédance électrochimique. Les moyens de mesures électrochimiques comportent un potentiostat 9 et trois électrodes : une électrode de travail formé par le tube 3, une contre-électrode 6, et une électrode de référence 7. La contre-électrode 6 peut être de préférence en métal non corrodable, par exemple en platine. L'électrode de référence 7 peut être par exemple une électrode Ag/AgCl exposée à une solution interne de KCl. Afin de former l'électrode de travail, le tube 3 en métal est relié au potentiostat 9 par une connexion électrique 5.

Le système expérimental 1 comprend de plus des moyens de bullage 16 pour l'injection d'un gaz 17 dans le premier fluide 19. Pour ce mode de réalisation, le réservoir peut comprendre en outre une sortie de gaz 18, permettant une évacuation du gaz introduit.

De plus, le système expérimental 1 peut comprendre des moyens de mesure du pH 8 du premier fluide 19.

Echangeur de chaleur

Cet objet de l'invention concerne un échangeur de chaleur entre deux fluides. Au sein de l'échangeur sont formés au moins deux volumes distincts et séparés par au moins une paroi métallique. Dans chaque volume circule un des deux fluides, l'échange de chaleur étant réalisé par l'au moins une paroi métallique séparant les deux volumes.

Selon l'invention, l'échangeur de chaleur comprend un dispositif de détermination d'une variation de performances thermiques de l'échangeur de chaleur selon l'une quelconque des variantes ou des combinaisons de variantes décrites précédemment du premier objet de l'invention. Ainsi, il est possible de suivre en temps réel une variation de performances thermiques de l'échangeur de chaleur.

L'échangeur de chaleur peut être un échangeur de chaleur à tubes, c'est-à-dire un échangeur de chaleur pour lequel l'au moins une paroi métallique a la forme d'un tube, dans lequel circule un des deux fluides.

Alternativement, l'échangeur de chaleur peut être un échangeur de chaleur à plaques, c'est-à-dire un échangeur de chaleur, pour lequel l'au moins une paroi métallique a la forme d'une plaque plane, de chaque côté de la plaque circule un des deux fluides.

Il peut s'agir d'un échangeur de chaleur à contre-courant ou à co-courant.

L'échangeur de chaleur comprend :

- Une entrée pour le premier fluide,
- Une sortie pour le premier fluide,
- Une entrée pour le deuxième fluide, et
- Une sortie pour le deuxième fluide.

Les premier et deuxième fluides sont les fluides pouvant être mis en œuvre dans l'échangeur de chaleur. Il peut s'agir notamment, de fluides caloporteurs, de gaz, de vapeur d'eau, de fluide aqueux, de liquides, de l'huile etc.

Le dispositif de détermination d'une variante de performances thermiques de l'échangeur de chaleur peut être mis en œuvre pour l'ensemble des parois métalliques au sein de l'échangeur de chaleur. En variante, le dispositif de détermination d'une variante de performances thermiques de l'échangeur de chaleur peut être mis en œuvre pour une portion d'une paroi métallique au sein de l'échangeur de chaleur. Pour cette variante de réalisation, la portion de paroi métallique considérée peut être isolée électriquement.

La figure 2 illustre, schématiquement et de manière non limitative, un échangeur de chaleur très simplifié selon un exemple de réalisation d'un échangeur de chaleur à tubes. La circulation du premier fluide dans cet échangeur de chaleur est représentée par des flèches fines, et la circulation du deuxième fluide est représentée par des flèches épaisses. Cet échangeur de chaleur 18 comprend une entrée 23 du premier fluide, une sortie 24 du premier fluide, une entrée 21 du deuxième fluide, et une sortie 22 du deuxième fluide. L'échangeur de chaleur 18 comprend deux tubes 26, dans lesquels circule le premier fluide. Le deuxième fluide 25 circule autour des deux tubes 26. Les tubes 26 sont délimitées par une paroi métallique 20. L'échangeur de chaleur 18 comprend des moyens de mesures électrochimiques, de préférence des moyens de mesure d'impédance électrochimique qui comprend un potentiostat 9, une électrode de travail formée par une portion de la paroi métallique 20, une contre-électrode 6 et une électrode de référence 7. La portion de la paroi métallique 20 est reliée au potentiostat 9 par une tige conductrice électrique 5. Dans la configuration de cette figure 2, l'encrassement se produit sur la paroi métallique 20 en contact avec le deuxième fluide 25.

L'invention concerne également un échangeur de chaleur entre un fluide et une source de chaleur ou une source de froid, par exemple une résistance électrique chauffante, l'encrassement pouvant se produire sur la surface métallique en contact avec le fluide.

Un tel échangeur de chaleur peut comprendre :

- Une entrée pour le premier fluide,
- Une sortie pour le premier fluide, et
- Une source de chaleur ou une source de froid, par exemple une résistance électrique chauffante.

Le premier fluide est un fluide pouvant être mis en œuvre dans l'échangeur de chaleur. Il peut s'agir notamment, de fluides caloporteurs, de gaz, de vapeur d'eau, de fluide aqueux, de liquides, d'huiles etc.

Le dispositif de détermination d'une variante de performances thermiques de l'échangeur de chaleur peut être mis en œuvre pour l'ensemble des parois métalliques au sein de l'échangeur de chaleur. En variante, le dispositif de détermination d'une variante de performances thermiques de l'échangeur de chaleur peut être mis en œuvre pour une portion d'une paroi métallique au sein de l'échangeur de chaleur. Pour cette variante de réalisation, la portion de paroi métallique considérée peut être isolée électriquement.

Procédé de détermination d'une variation de performances thermiques d'un échangeur de chaleur

Cet objet de l'invention concerne un procédé de détermination d'une variation de performances thermiques d'un échangeur de chaleur. L'échangeur de chaleur permet un échange de chaleur entre deux fluides, ou entre un fluide et une source de chaleur ou une source de froid, par exemple une résistance électrique chauffante. Le transfert thermique entre les deux fluides ou entre le fluide et la source de chaleur ou la source de froid étant permis par au moins une paroi métallique.

Pour ce procédé, on peut mettre en œuvre les étapes suivantes :

a. On réalise, à un premier instant, une première mesure électrochimique, de préférence une mesure d'impédance électrochimique, au moyen d'au moins deux électrodes, une électrode étant formée par une paroi métallique ;
b. On réalise, à un deuxième instant, une deuxième mesure électrochimique, de préférence une mesure d'impédance électrochimique, au moyen desdites deux électrodes ; et
c. On compare la première mesure électrochimique à la deuxième mesure électrochimique, et on en déduit une variation de performances thermiques de l'échangeur de chaleur entre le premier instant et le deuxième instant.

Le procédé selon l'invention peut mettre en œuvre le dispositif de détermination d'une variation de performances thermiques d'un échangeur de chaleur selon l'une quelconque des variantes ou des combinaisons de variantes décrites précédemment.

De plus, le procédé selon l'invention peut être appliqué au système expérimental selon l'une quelconque des variantes ou des combinaisons de variantes décrites précédemment.

En outre, le procédé selon l'invention peut être appliqué à l'échangeur de chaleur selon l'une quelconque des variantes ou des combinaisons de variantes décrites précédemment.

Pour le mode de réalisation pour lequel on détermine une mesure d'impédance électrochimique, la mesure peut être mise en œuvre à basse fréquence, notamment à une fréquence pouvant être comprise entre $10^{-3}$ et $10^{5}$ Hz, de préférence comprise entre $10^{-2}$ et $10^{4}$ Hz. De plus, dans ce cas, la mesure peut être mise en œuvre à une amplitude comprise entre $\pm 1$ et $\pm 100$ mV, de préférence comprise entre $\pm 5$ et $\pm 20$ mV. Ces gammes de valeur permettent une mesure adaptée à l'impédance électrochimique pour en déduire l'encrassement et la variation de performances thermiques.

Pour ce mode de réalisation, on peut analyser la mesure d'impédance chimique au moyen d'un circuit électrique équivalent, par exemple au moyen d'un circuit de Randles, qui est composé de la résistance de la solution (résistance du premier fluide) en série avec un assemblage en parallèle d'un élément qui représente la capacité de l'interface métallique de la paroi métallique et d'une résistance de transfert de charge à l'interface métallique de la paroi métallique. Selon un aspect de l'invention, le circuit électrique équivalent peut comprendre une impédance de diffusion semi-infinie. En particulier, la résistance de transfert de charge à l'interface métallique permet de déduire l'encrassement, et par conséquent une variation des performances thermiques de l'échangeur. Alternativement, d'autres circuits électriques équivalent peuvent être utilisés en fonction du type de mesures électrochimiques.

Selon un aspect, la détermination des performances thermiques peut être réalisée au moyen d'une relation qui relie une résistance d'un circuit électrique équivalent aux performances thermiques. Cette relation peut être déterminée au moyen d'une étape préalable de calibration, pendant laquelle on peut mettre en œuvre une autre méthode ou une autre mesure de détermination des performances thermiques telle que celle de l'art antérieur utilisant les températures.

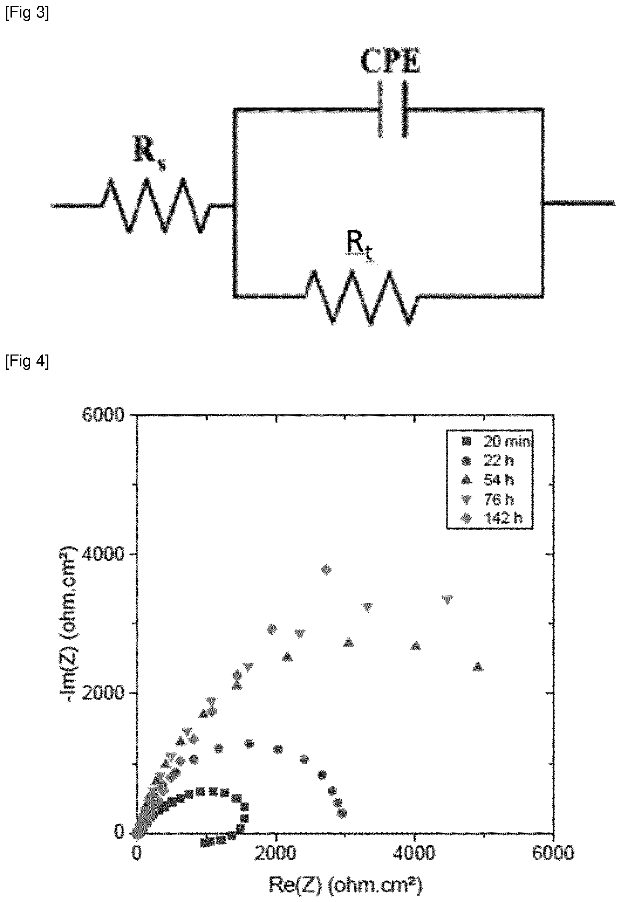

La figure 3 illustre, schématiquement et de manière non limitative, le circuit de Randles mis en œuvre par le procédé selon un mode de réalisation de l'invention. Le circuit comprend une résistance de la solution $R_S$ (résistance du premier fluide) en série avec un assemblage en parallèle d'un élément qui représente la capacité de l'interface métallique CPE de la paroi métallique et d'une résistance de transfert $R_t$ de charge à l'interface métallique de la paroi métallique.

Le procédé de détermination d'une variation des performances thermiques peut être mis en œuvre dans un procédé de surveillance d'un échangeur de chaleur pour lequel on réalise les étapes suivantes :

- On détermine les variations des performances thermiques de l'échangeur de chaleur selon l'une quelconque des variantes ou des combinaisons de variantes du procédé décrit précédemment ;
- Si la variation déterminée des performances thermiques est supérieure à un seuil, on réalise une opération de maintenance (par exemple nettoyage), ou une opération de remédiation de l'encrassement (par exemple au moyen d'un inhibiteur d'encrassement ou par l'injection d'acide).

Pour cela l'intervalle de temps peut être prédéfini en fonction de la durée d'utilisation de l'échangeur de chaleur, et/ou du type de fluide, etc. Par exemple, ce procédé peut être mise en œuvre à intervalle régulier, par exemple, tous les jours, toutes les semaines, tous les mois, tous les trimestres, tous les ans, etc.

Ainsi, il est possible de réaliser les opérations de maintenance ou de remédiation au moment opportun, de manière à limiter les coûts liés à ses opérations tout en assurant de bonnes performances thermiques de l'échangeur de chaleur.

Comme il va de soi, l'invention ne se limite pas aux seules formes de réalisation des différents objets décrits ci-dessus à titre d'exemple, elle embrasse au contraire toutes les variantes de réalisation.

Exemples comparatifs

Les caractéristiques et avantages de l'invention apparaîtront plus clairement à la lecture des exemples comparatifs ci-après.

Deux essais ont été réalisés au moyen du système expérimental de la figure 1. Les essais ont été réalisés pour des premiers fluides encrassant différents, tels que décrits dans le tableau 1. Ces deux premiers fluides diffèrent par les concentrations en ions carbonates ($CO_3^{2-}$) et en ions $Ca^{2+}$, conduisant à des niveaux variables de l'indice de saturation (SI).

[Table 1]

| N° essai | NaCl (g/L) | CaCl2 (g/L) | NaHCO3 (g/L) | pH | SI |
|---|---|---|---|---|---|
| 1 | 10 | 0,45 | 0,3 | 10 | 1,3 |
| 2 | 10 | 0,9 | 0,6 | 10 | 1,9 |

Pour les essais, la température du premier fluide est maintenue à 40°C par circulation d'un troisième fluide dans la double-enveloppe du réservoir. La température du deuxième fluide circulant à l'intérieur du tube métallique est portée à 90°C. Ce deuxième fluide est constitué d'un mélange d'eau et de glycol, permettant un bon transfert de calories sans subir d'évaporation excessive. Cette configuration est favorable à la précipitation du carbonate de calcium à la surface extérieure du tube métallique en contact avec l'un ou l'autre des premiers fluides, puisque sa solubilité diminue lorsque la température augmente.

Au fur et à mesure de la précipitation d'un dépôt en surface du tube, des mesures d'impédance électrochimique sont réalisées au moyen du dispositif selon l'invention. De plus, des mesures de température en surface du tube sont réalisées pour mettre en œuvre la méthode de référence de l'art antérieur décrite dans le document : Bipan Bansal, Hans MÜller-Steinhage (2001) Comparison of Crystallization Fouling in Plate and Double-Pipe Heat Exchangers. In : Heat Transfer Engineering, vol. 22, n° 5, p. 13-25. DOI: 10.1080/01457630117.

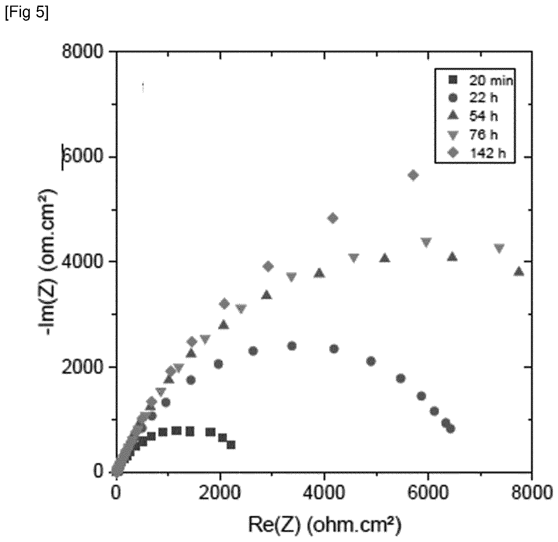

Les figures 4 et 5 représentent l'évolution en fonction du temps de la partie imaginaire de l'impédance électrochimique Im(Z) en fonction de la partie réelle Re(Z) de l'impédance électrochimique. La figure 4 correspond à l'essai n° 1, la figure 5 correspond à l'essai n° 2. Sur ces courbes, les carrés correspondent à un temps d'expérimentation de 20 min, les ronds à un temps d'expérimentation de 22 h, les triangles avec un sommet vers le haut à un temps d'expérimentation de 54 h, les triangles avec un sommet vers le bas à un temps d'expérimentation de 76 h, et des losanges à un temps d'expérimentation 142 h. Les différents points de mesure correspondent à différentes fréquences de mesure. Les mesures à hautes fréquences correspondent aux points à proximité de l'origine, et les mesures à basses fréquences correspondent aux points les plus à droite de chaque temps d'expérimentation considéré.

Les mesures ont été réalisées avec une amplitude en potentiel de +/- 10 mV, et dans une gamme de fréquence comprise entre $10^4$ Hz et $10^{-2}$ Hz. Ces résultats ont été analysés de manière classique avec un circuit de Randles, tel qu'illustré en figure 3, composé de la résistance de la solution (Rs) en série avec un assemblage en parallèle d'un élément qui représente la capacité de l'interface métallique (CPE) et d'une résistance de transfert de charge (Rt) à l'interface métallique.

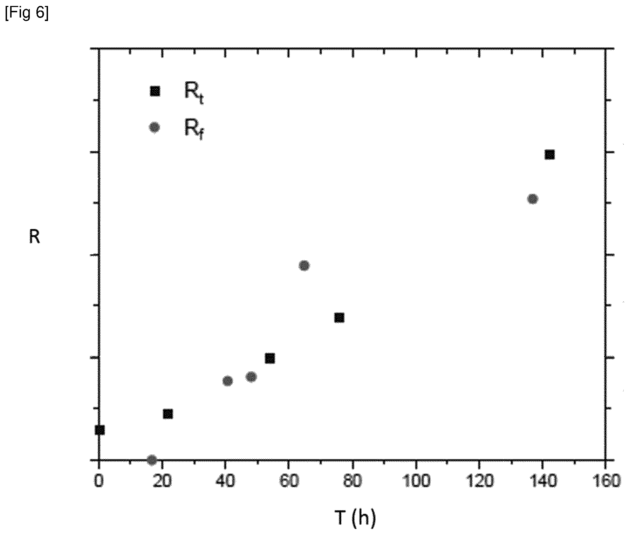

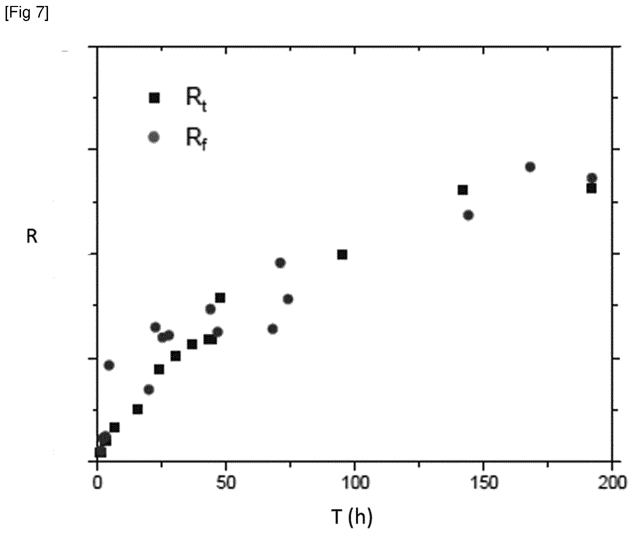

Les figures 6 et 7 présentent une comparaison de l'évolution de l'évolution de la résistance Rt en fonction du temps T en heure. La figure 6 correspond à l'essai n° 1, et la figure 7 à l'essai n° 2. Sur ces figures, les carrés correspondent à la résistance (Rt) obtenue par les mesures d'impédance selon le mode de réalisation de l'invention et déduites des courbes des figures 4 et 5, et les ronds correspondent à la résistance d'encrassement (Rf) obtenue à partir des mesures de température et de la méthode selon l'art antérieur. On constate sur ces deux graphes une très bonne corrélation (en fonction de temps) entre le procédé selon l'invention et la méthode selon l'art antérieur pour les deux essais. Ainsi, ces exemples comparatifs confirment la précision de la mesure d'impédance électrochimique pour évaluer une variation de performances thermiques d'un échangeur chaleur.

**Revendications**

1. Dispositif de détermination d'une variation de performances thermiques d'un échangeur de chaleur entre deux fluides ou entre un fluide et une source de chaleur ou une source de froid, ledit échangeur de chaleur comprenant au moins une paroi métallique pour le transfert thermique, **caractérisé en ce que** ledit dispositif comporte des moyens de mesures électrochimiques, lesdits moyens de mesures électrochimiques comprenant une électrode formée par ladite au moins une paroi métallique et au moins une deuxième électrode, et **en ce que** ledit dispositif comporte des moyens de détermination de la variation de performances thermiques dudit échangeur de chaleur qui comparent la mesure électrochimique réalisée par lesdits moyens de mesures électrochimiques entre au moins deux instants distincts.

2. Dispositif selon la revendication 1, dans lequel ledit dispositif comporte des moyens de mesure de la température d'au moins un des fluides.

3. Dispositif selon l'une des revendications précédentes, dans lequel lesdits moyens de mesures électrochimiques comportent au moins une contre électrode, de préférence la contre électrode est en platine.

4. Dispositif selon l'une des revendications précédentes, dans lequel lesdits moyens de mesures électrochimiques comportent au moins une électrode de référence, ladite électrode de référence étant agencée dans un desdits deux fluides, de préférence ladite électrode de référence est de type Ag/AgCl.

5. Dispositif selon l'une des revendications précédentes, dans lequel lesdits moyens de mesures électrochimiques sont des moyens de mesure de l'impédance électrochimique, notamment des moyens de spectroscopie d'impédance électrochimique.

**6.** Système expérimental de prédiction d'une variation de performances thermiques d'un échangeur de chaleur, ledit système de prédiction comprenant un réservoir comportant un premier fluide, une portion de paroi métallique dudit échangeur de chaleur agencée dans ledit premier fluide au sein dudit réservoir, et dans lequel on fait circuler un deuxième fluide ou dans lequel on apporte de la chaleur ou du froid, **caractérisé en ce que** ledit système de prédiction comprend un dispositif de détermination d'une variation de performances thermiques d'un échangeur de chaleur selon l'une des revendications précédentes, pour lequel lesdits moyens de mesures électrochimiques comprennent au moins deux électrodes, dont une électrode est formée par ladite paroi métallique.

**7.** Système expérimental selon la revendication 6, dans lequel ledit système de prédiction comprend des moyens de bullage d'un gaz dans ledit premier fluide.

**8.** Echangeur de chaleur comprenant au moins deux volumes pour la circulation respectives de deux fluides, lesdits deux volumes étant séparés par au moins une paroi métallique, **caractérisé en ce que** ledit échangeur de chaleur comprend au moins un dispositif selon l'une des revendications 1 à 5, une électrode desdits moyens de mesure électrochimiques étant formée par ladite au moins une paroi métallique.

**9.** Echangeur de chaleur selon la revendication 8, dans lequel ledit échangeur de chaleur est un échangeur de chaleur à tubes ou un échangeur de chaleur à plaques.

**10.** Procédé de détermination d'une variation de performances thermiques d'un échangeur de chaleur entre deux fluides ou entre un fluide et une source de chaleur ou une source de froid, ledit échangeur de chaleur comprenant au moins une paroi métallique pour le transfert thermique entre lesdits deux fluides, **caractérisé en ce qu'**on met en œuvre les étapes suivantes :

a. On réalise, à un premier instant, une première mesure électrochimique, de préférence une mesure d'impédance électrochimique, au moyen de deux électrodes, une électrode étant formée par ladite au moins une paroi métallique,
b. On réalise, à un deuxième instant, une deuxième mesure électrochimique, de préférence une mesure d'impédance électrochimique, au moyen desdites deux électrodes ; et
c. On compare ladite première mesure électrochimique à ladite deuxième mesure électrochimique, et on en déduit une variation de performances thermiques dudit échangeur de chaleur entre le premier instant et le deuxième instant.

**11.** Procédé selon la revendication 10, dans lequel on réalise ladite mesure d'impédance électrochimique, notamment une spectroscopie d'impédance électrochimique, à une fréquence comprise entre $10^{-3}$ et $10^{5}$ Hz, de préférence comprise entre $10^{-2}$ et $10^{4}$ Hz.

**12.** Procédé selon l'une des revendications 10 ou 11, dans lequel on réalise ladite mesure d'impédance électrochimique, notamment une spectroscopie d'impédance électrochimique, à une amplitude comprise entre $\pm 1$ et $\pm 100$ mV, de préférence comprise entre $\pm 5$ et $\pm 20$ mV.

[Fig 1]

[Fig 2]

[Fig 3]

[Fig 4]

[Fig 5]

[Fig 6]

[Fig 7]

Europäisches
Patentamt

European
Patent Office

Office européen
des brevets

# RAPPORT DE RECHERCHE EUROPEENNE

Numéro de la demande

EP 22 17 8685

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SU JINGXIN ET AL: "Fouling corrosion in aluminum heat exchangers", CHINESE JOURNAL OF AERONAUTICS, vol. 28, no. 3, 20 avril 2015 (2015-04-20), pages 954-960, XP055892018, NL ISSN: 1000-9361, DOI: 10.1016/j.cja.2015.02.015 | 1,3-5 | INV. G01N17/00 G01N27/02 G01N17/02 ADD. F28F27/00 F28G15/00 F28F19/00 |
| Y | * figures 2,8 * * 2.3 Corrosion rate measurements; page 955 – page 956 * * 2.4 EIS measurements; page 956 * ----- | 2 | |
| Y | DEFFO AYAGOU MARTIEN DUVALL ET AL: "EElectrochemical impedance spectroscopy of iron corrosion in H2S solutions", ELECTROCHIMICA ACTA, vol. 282, 14 juin 2018 (2018-06-14), pages 775-783, XP055891995, AMSTERDAM, NL ISSN: 0013-4686, DOI: 10.1016/j.electacta.2018.06.052 * figure 2 * * page 777, colonne 2, dernier alinéa – page 778, colonne 1, alinéa 4 * ----- | 2-5,7, 11,12 | |
| X | GB 2 101 731 A (ICI PLC [GB]) 19 janvier 1983 (1983-01-19) | 1,6,8-10 | |
| Y | * figure 2 * * page 1, lignes 34-63 * * page 2, lignes 50-87 * ----- | 2-5,7, 11,12 | |
| X | JP 2005 147479 A (PENTEL KK; MATSUNAGA TADASHI) 9 juin 2005 (2005-06-09) | 1,6,8-10 | |
| Y | * figure 3; exemple 3 * * alinéa [0038] * ----- | 2-5,7, 11,12 | |

DOMAINES TECHNIQUES RECHERCHES (IPC)

G01N

-/--

Le présent rapport a été établi pour toutes les revendications

| Lieu de la recherche | Date d'achèvement de la recherche | Examinateur |
|---|---|---|
| La Haye | 14 octobre 2022 | Bockstahl, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 22 17 8685

## DOCUMENTS CONSIDERES COMME PERTINENTS

| Catégorie | Citation du document avec indication, en cas de besoin, des parties pertinentes | Revendication concernée |
|---|---|---|
| A,D | WO 2014/184421 A1 (ROCSOLE LTD [FI]) 20 novembre 2014 (2014-11-20) * figure 2 * * page 16, ligne 18 – page 17, ligne 23 * ----- | 1-12 |

**CLASSEMENT DE LA DEMANDE   (IPC)**

**DOMAINES TECHNIQUES RECHERCHES   (IPC)**

Le présent rapport a été établi pour toutes les revendications

| Lieu de la recherche | Date d'achèvement de la recherche | Examinateur |
|---|---|---|
| La Haye | 14 octobre 2022 | Bockstahl, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 22 17 8685

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-10-2022

| Document brevet cité au rapport de recherche | Date de publication | Membre(s) de la famille de brevet(s) | Date de publication |
|---|---|---|---|
| GB 2101731 A | 19-01-1983 | AUCUN | |
| JP 2005147479 A | 09-06-2005 | AUCUN | |
| WO 2014184421 A1 | 20-11-2014 | EP 2997358 A1 | 23-03-2016 |
| | | US 2016169825 A1 | 16-06-2016 |
| | | WO 2014184421 A1 | 20-11-2014 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 209486013 U
- WO 09153323 A1
- EP 2115452 A
- WO 2014184421 A1

**Littérature non-brevet citée dans la description**

- **BIPAN BANSAL ; HANS MÜLLER-STEINHAGE.** Comparison of Crystallization Fouling in Plate and Double-Pipe Heat Exchangers. *Heat Transfer Engineering,* 2001, vol. 22 (5), 13-25